# EUROPÄISCHE PATENTSCHRIFT

(11) **EP 2 099 287 B1**
(45) Veröffentlichungstag und Bekanntmachung des Hinweises auf die Patenterteilung: **11.01.2012**
(21) Anmeldenummer: 07847838.5
(22) Anmeldetag: 05.12.2007
(51) Int. Cl.: A01G 31/00, A01G 9/10

(54) **PFLANZENSUBSTRAT AUF BASIS VON OFFENZELLIGEM MELAMIN-FORMALDEHYD-SCHAUMSTOFF**
PLANT SUBSTRATE BASED ON AN OPEN CELL MELAMINE-FORMALDEHYDE FOAM
SUBSTRAT VÉGÉTAL À BASE DE MOUSSE À CELLULES OUVERTES EN MÉLAMINE-FORMALDÉHYDE

(30) Priorität: 06.12.2006 EP 06125531
(43) Veröffentlichungstag der Anmeldung: 16.09.2009
(73) Patentinhaber: BASF SE, 67056 Ludwigshafen (DE)
(72) Erfinder: WISSEMEIER, Alexander, 67346 Speyer (DE); WEIGELT, Wolfgang, 67373 Dudenhofen (DE); ALTEHELD, Armin, 55543 Bad Kreuznach (DE); BAUMGARTL, Horst, 55122 Mainz (DE); QUADBECK-SEEGER, Hans-Jürgen, 67098 Bad Dürkheim (DE)
(86) Internationale Anmeldenummer: PCT/EP2007/063345
(87) Internationale Veröffentlichungsnummer: WO 2008/068278

(56) Entgegenhaltungen:
- WO-A-2005/104821
- DE-B3-102004 004 856
- DE-U1- 9 402 159
- DE-U1-202005 018 041
- US-A- 4 058 931

## Beschreibung

Die Erfindung betrifft ein synthetisches Pflanzensubstrat, sowie dessen Verwendung zur Aufzucht von Pflanzen.

Aus dem deutschen Gebrauchsmuster G 94 02 159.7 U1 ist ein Bodenverbesserungsmittel bekannt, das Torf und einen offenzelligen Melamin/Formaldehyd-Schaumstoff in Flockenform enthält, wobei auch Pflanz-, Blumen- oder Graberde zugesetzt werden kann. Das Bodenverbesserungsmittel ist rieselfähig und wird in den Boden eingebracht.

Pflanzen, die sich in Blumentöpfen oder Pflanzencontainern befinden, müssen häufiger bewässert werden als solche, die unmittelbar im Boden (z.B. in Blumenbeeten) stehen, da die Menge der Erde im Topf begrenzt ist. Auch Rasenpflanzen und bestimmte andere Gartenpflanzen sind empfindlich gegen Trockenheit und müssen häufig gewässert werden. Die Wasserspeicherfähigkeit des genannten Bodenverbesserungsmittels ist bei diesen Anwendungen nicht immer zufrieden stellend.

In dem deutschen Gebrauchsmuster DE 20 2005 018 041 U1 werden daher wasserspeichernde, in Kontakt mit Pflanzenerde oder Erdboden stehende Bahnen aus einem offenzelligen Melamin-Formaldehyd-Schaumstoff vorgeschlagen.

Es bleibt jedoch auch im Hinblick auf diese Erfindung noch Raum für Verbesserungen, insbesondere was das Substrat selbst, in dem die Pflanzen wurzeln, angeht.

Dies liegt unter anderem daran, dass die Anforderungen an Substrate im modernen Pflanzenbau sehr hoch sind.

Sie sollen gegenüber natürlichem Boden oder natürlichen Substraten wie Torf eine Reihe von Vorteilen aufweisen, wie
- Vereinfachung der Bewässerung, hohes Wasserspeichervermögen, das Über-oder Unterversorgung der Pflanzen mit Wasser bei unregelmäßigem Gießen ausgleicht,
- das Substrat soll auch bei großer Menge an aufgenommenem Wasser, die Permeation von Sauerstoff in den Wurzelbereich ermöglichen,
- Wasseraufnahme und -abgabe sollen bei geringen Volumenänderungen des Substrats erfolgen,
- das Substrat soll einfach in das zu bepflanzende Gefäß eingebracht werden können und das zu bepflanzende Volumen optimal ausnutzen,
- die Pflanzen sollen einfach in das Substrat eingepflanzt und ausgepflanzt werden können,
- die Wurzeln der Pflanze sollen ausreichend mechanischen Halt im Substrat finden,
- Wirkstofffreisetzungssysteme sollen einfach inkorporiert werden können (z.B. Dünger oder Pflanzenschutzmittel) und
- das Substrat soll sterilisierbar sein und wiederholt verwendet werden können.

Es wurde gefunden, dass ein Substrat auf Basis von offenzelligen Melamin-Formaldehyd-Schaumstoffen die genannten Anforderungen in hohem Maße erfüllt und die Zugabe von Torf nicht erforderlich ist. Die Erfindung löst diese Aufgabe mit den Merkmalen in Hauptanspruch.

Das erfindungsgemäße Substrat kann völlig wasserfrei gelagert und transportiert werden, ohne dass es hydrophobe Eigenschaften annimmt, wie z.B. Substrate auf Torfbasis. Durch die erfindungsgemäße Verwendung wird eine hervorragende Luftführung erzielt und die Bewässerung erheblich vereinfacht.

Weiterhin Gegenstand der Erfindung ist die Verwendung einer Mischung, bestehend aus
(a) 25 bis 100 Gew.-% an einem offenzelligen Melamin-Formaldehyd-Schaumstoff,
(b) 0 bis 75 Gew.-% an weiteren synthetischen Pflanzensubstraten und/oder Mineralboden und
(c) 0 bis 25 Gew.-% an einem oder mehreren Wirkstofffreisetzungssystemen und/oder weiteren Zusatzstoffen,
   als Substrat zum Kultivieren von Pflanzen.

Ebenso Gegenstand der Erfindung ist ein Verfahren zum Kultivieren von Pflanzen, wobei die Pflanzen in einem Substrat, bestehend aus
(a) 25 bis 100 Gew.-% an einem offenzelligen Melamin-Formaldehyd-Schaumstoff,
(b) 0 bis 75 Gew.-% an weiteren synthetischen Pflanzensubstraten und/oder Mineralboden und
(c) 0 bis 25 Gew.-% an einem oder mehreren Wirkstofffreisetzungssystemen und/oder weiteren Zusatzstoffen,
   aufgezogen werden.

Alle Angaben in Gew.-% beziehen sich stets auf das Gesamtgewicht des erfindungsgemäßen Pflanzensubstrats. Bevorzugt ist das Pflanzensubstrat im Wesentlichen frei von Torf.

Als Schaumstoff sind alle offenzelligen Schaumstoffe aus Melamin-Formaldehyd-Kondensationsharzen geeignet. Besonders bevorzugt sind elastische Schaumstoffe auf Basis von Melaminharzen, wie sie in der EP 0 017 672 A1 beschrieben sind. Es wird ausdrücklich auf diese Schrift verwiesen. Derartige Schaumstoffe sind beispielsweise als Basotect® von der BASF Aktiengesellschaft erhältlich.

Unter einem offenzelligen Schaumstoff im Sinne der Erfindung versteht man einen Schaumstoff, bei welchem das Polymer eine verzweigte Struktur aus einzelnen Stegen bildet und die einzelnen Blasen, die beim Schäumen entstanden sind, miteinander verbunden sind. Im Unterschied dazu ist ein geschlossenzelliger Schaumstoff ein Schaumstoff, bei welchem jeweils einzelne Blasen vollständig durch Polymermaterial umschlossen sind und somit auch in fertig ausgeschäumtem und ausgehärtetem Kunststoff die einzelnen Schaumblasen durch Polymermembranen voneinander getrennt sind.

Ein offenzelliger Schaumstoff, der sich zur Herstellung von Blöcken oder Bahnen aus Schaumstoffteilen gemäß dem erfindungsgemäßen Verfahren eignet, weist vorzugsweise ein Porenvolumen von mindestens 0,95 m³/m³, bevorzugt von mindestens 0,98 m³/m³ und insbesondere von mindestens 0,985 m³/m³ auf. Unter dem Begriff Porenvolumen wird dabei das Verhältnis des Volumens der Poren bezogen auf das Volumen des Schaumstoffes verstanden. Mit zunehmenden Werten des Porenvolumens nimmt die Länge der Stege im offenzelligen Schaumstoff zu. Gleichzeitig nimmt der Durchmesser der Stege ab.

Die Rohdichte eines solchen Schaumstoffs beträgt beispielsweise 4 bis 100, bevorzugt 6 bis 60, insbesondere 8 bis 40 und besonders bevorzugt 8 bis 20 g/l nach DIN 53420.

Zur Herstellung kann nach EP-A 071 672 oder EP-A 037 470 eine hochkonzentrierte, treibmittelhaltige Lösung oder Dispersion eines Melamin-Formaldehyd-Vorkondensates mit Heißluft, Wasserdampf oder durch Mikrowellenbestrahlung verschäumt und ausgehärtet werden.

Das Molverhältnis Melamin/Formaldehyd liegt im allgemeinen im Bereich von 1 : 1 bis 1 : 5. Zur Herstellung besonders formaldehydarmer Schaumstoffe wird das Molverhältnis im Bereich von 1 : 1,3 bis 1 : 1,8 gewählt und ein sulfitgruppenfreies Vorkondensat eingesetzt, wie z. B in WO 01/94436 beschrieben.

Ganz besonders bevorzugt sind elastische Schaumstoffe auf Basis eines Melamin/Formaldehyd-Kondensationsproduktes, welches mindestens 50 Gew.-%, vorzugsweise mindestens 80 Gew.-% Melamin und Formaldehyd-Einheiten einkondensiert enthält, bis zu 50, vorzugsweise bis zu 20 Gew.-% andere amino-, amid-, hydroxyl- oder carboxylgruppenhaltige Duroplastbildner einerseits und Aldehyde andererseits einkondensiert enthalten kann, und durch folgende Eigenschaften gekennzeichnet sind:
a) die Rohdichte nach DIN 53 420 liegt zwischen 4 und 80, vorzugsweise zwischen 6 und 60 und insbesondere zwischen 8 und 40 [g·l⁻¹];
b) die Wärmeleitzahl nach DIN 52 612 ist kleiner als 0,06, vorzugsweise kleiner als 0,05 und insbesondere kleiner als 0,04 [W·m⁻¹·^{o}K⁻¹];
c) die Stauchhärte nach DIN 53 577 bei 60 % Stauchung, dividiert durch die Rohdichte liegt unter 0,3, vorzugsweise unter 0,2 [N·cm⁻²/g·l⁻¹], wobei bei der Bestimmung der Stauchhärte bei 60 % Stauchung eine Wiedererholung des Schaumstoffs auf mindestens 70 %, vorzugsweise mindestens 80 % und insbesondere mindestens 90 % seiner ursprünglichen Abmessung erfolgen muss;
d) der Elastizitätsmodul in Anlehnung an DIN 50 423, dividiert durch die Rohdichte liegt unter 0,25, vorzugsweise unter 0,2 und insbesondere unter 0,15 [N·mm⁻²/g·l⁻¹];
e) der Biegeweg beim Bruch nach DIN 53 423 ist größer als 6, vorzugsweise größer als 9 und insbesondere größer als 12 [mm];
f) sie sind nach DIN 4102 mindestens normalentflammbar, vorzugsweise schwerentflammbar;
g) die Zugfestigkeit nach DIN 53 571 beträgt vorzugsweise mindestens 0,07, insbesondere mindestens 0,1 N·mm⁻².

In einer bevorzugten Ausführungsform enthält das erfindungsgemäße Pflanzensubstrat ausschließlich synthetische Pflanzensubstrate.

In einer weiteren bevorzugten Ausführungsform enthält das erfindungsgemäße Pflanzensubstrat Mineralboden.

In einer weiteren bevorzugten Ausführungsform enthält das erfindungsgemäße Pflanzensubstrat keine weiteren synthetischen Pflanzensubstrate oder Mineralboden.

In einer weiteren bevorzugten Ausführungsform wird der Schaumstoff in zerkleinerter Form, beispielsweise in Form von Flocken eingesetzt. Solche Flocken weisen vorzugsweise einen mittleren Durchmesser von 1,5 bis 75 mm, insbesondere von 4 bis 40 mm auf.

In einer weiteren bevorzugten Ausführungsform wird der Schaumstoff als Block eingesetzt.

In einer bevorzugten Ausführungsform handelt es sich bei dem erfindungsgemäß eingesetzten Schaumstoff um ein Abfall- oder Recyclingmaterial.

Wird das erfindungsgemäße Substrat in zerkleinerter Form eingesetzt, können beispielsweise Schaumstoffteile, die als Verschnitt beim Zuschneiden von Formteilen oder bei der Herstellung von Schaumstoffblöcken oder -bahnen anfallen, zu Flocken zerkleinert werden.

Die Zerkleinerung der Schaumstoffteile zu Flocken kann dabei zum Beispiel durch Zerreißen der Schaumstoffteile, durch Schneiden oder durch Stanzen erfolgen. Bevorzugt werden die Flocken durch Zerreißen der Schaumstoffteile erzeugt, da in diesem Fall eine große, unregelmäßige Oberfläche entsteht.

In einer bevorzugten Variante wird der offenzellige Schaumstoff vor dem Schneiden oder Zerteilen mit einer Flüssigkeit, beispielsweise Alkohole, Ketone, flüssige Kohlenwasserstoffe oder Wasser getränkt. Bevorzugt wird Wasser verwendet.

Das Zerteilen kann mittels üblichen Zerkleinerungsmaschinen, welche rotierende Messer oder quetschende Teile aufweisen. Geeignete Zerkleinerungsmaschinen sind beispielsweise Mühlen, wie Kugelmühlen oder Ultraturax, Extruder.

Je nach Art der Zerkleinerungsmaschine bzw. Rotationsgeschwindigkeit der Messer können feinteilige Partikel (Pulver) oder watteähnliche Stücke (Flocken) erhalten werden. Ein Wasser- oder Alkohol-getränktes Schaumstoffstück kann auf diese Weise besonders einfach und staubfrei zu einer Aminoplast-Partikel-Suspension verarbeitet werden. Falls gewünscht kann die Suspension anschließend filtriert oder zentrifugiert und das erhaltende Pulver anschließend getrocknet werden.

Auch beim Einsatz in Blockform können Abfall- oder Recyclingmaterialien verwendet werden.

Beispielsweise ist aus EP-B 0 646 452 ein Verfahren zur Herstellung von Schaumstoff-Formteilen bekannt, bei welchem Abfallteile aus offenzelligem Melaminharz-Schaumstoff mit einem Raumgewicht von 5 bis 100g/l zu Flocken zerkleinert werden. Aus den Flocken wird zusammen mit einem Bindemittel, einem Härter und Wasser eine rieselfähige Masse zubereitet. Die rieselfähige Masse wird in eine geschlossene Form gegeben und in der Form auf ein Raumgewicht von 15 bis 120 g/l komprimiert. Durch Aushärten des Bindemittels wird die Form zu einem Formteil fixiert.

Bevorzugt ist ein Verfahren zur Herstellung von Blöcken aus Schaumstoffteilen mindestens eines offenzelligen Schaumstoffes, welches folgende Schritte umfasst:
(a) Zerkleinern der Schaumstoffteile zu Flocken,
(b) Pressen der Flocken zu einem Verbund,
(c) Mechanisches Verbinden der Flocken durch Vernadeln.

Durch die Verbindung der Schaumstoffflocken durch Vernadeln wird der sonst notwendige Eintrag weiterer Stoffe in den Schaumstoff vermieden.

Ein solches Verfahren ist in der EP-A 1 764 204 beschrieben.

Um einzelne Schaumstoffteile, die als Verschnitt beim Zuschneiden von Formteilen oder bei der Herstellung von Schaumstoffblöcken anfallen, nicht entsorgen zu müssen, werden diese gemäß dem erfindungsgemäßen Verfahren zu Flocken zerkleinert.

Die Zerkleinerung der Schaumstoffteile zu Flocken kann dabei zum Beispiel durch Zerreißen der Schaumstoffteile, durch Schneiden oder durch Stanzen erfolgen. Bevorzugt werden die Flocken durch Zerreißen der Schaumstoffteile erzeugt, da in diesem Fall eine unregelmäßige Oberfläche entsteht, die eine bessere Verbindung der einzelnen Flocken beim Vernadein ermöglicht.

Um die einzelnen Flocken durch Vernadeln zu einem Block verbinden zu können, weisen diese vorzugsweise in jede Richtung eine Ausdehnung im Bereich von 3 bis 250 mm, vorzugsweise im Bereich von 5 bis 100 mm und insbesondere im Bereich von 10 bis 50 mm auf.

Das mechanische Verbinden der Flocken durch Vernadeln erfolgt vorzugsweise auf die gleiche Weise, wie das Vernadeln von Fasern zu einem Vlies. Die Herstellung eines Vlieses durch Vernadeln ist zum Beispiel aus DE-A 198 19 733 bekannt. Hierbei wird das Abstreifen des Vlieses von den Nadeln dadurch unterstützt, dass sich auf der dem Vlies gegenüberliegenden Seite des Abstreifers ein Druckluftraum befindet, aus welchem Druckluft durch Kanäle im Abstreifer auf das Vlies strömt und so das Vlies vom Abstreifer in Richtung der Stichunterlage gedrückt wird. Es ist jedoch auch möglich, das Vlies mit Hilfe des Abstreifers ohne Druckluftunterstützung von den Nadeln abzustreifen.

Als weitere künstliche Substrate eignen sich beispielsweise synthetisch-organisches Schaumharz auf Basis Harnstoff (z.B. Hygromull^{®}), geschlossenzelliges Styromull oder Mischungen davon (z.B. Hygropor^{®}73), Superabsorber (vernetzte Polyacrylate oder vernetzte Polyacrylamide (z.B. Luquasorb^{®}), wasserfreie mineralische Komponenten wie Sand, Kies, Blähton und Ton-Granulat (z.B. Seramis^{®}). Solche weiteren künstlichen Substrate sind in einem Anteil von 0 bis 75 Gew.-%, vorzugsweise 0 bis 40 Gew.-%, insbesondere 0 bis 20 Gew.-% vorhanden.

Unter einem Mineralboden wird im Sinne der Erfindung ein Boden verstanden, der ≤ 30 Gew.-% an organischer Substanz, d.h. Humus und/oder Biomasse, enthält. Bevorzugt ist ein Gehalt von ≤ 20 Gew.-%, insbesondere ≤ 15 Gew.-%. Der Gehalt an Mineralboden beträgt 0 bis 75 Gew.-%, vorzugsweise 0 bis 40 Gew.-%, insbesondere 0 bis 20 Gew.-%.

Das erfindungsgemäße Substrat enthält bevorzugt Freisetzungssysteme, die Düngemittel und/oder Pflanzenschutzmittel enthalten.

Bei den für das erfindungsgemäße Verfahren eingesetzten Düngemitteln kann es sich sowohl um Einzel- als auch Mehrnährstoffdünger handeln. Als Bestandteile dieser Düngemittel sind alle gängigen Düngemittelkomponenten denkbar, wobei als Stickstoffquellen beispielsweise Ammoniumsulfat, Ammoniumnitrat, Ammoniumchlorid, Ammonsulfatsalpeter, Harnstoff, Cyanamid, Dicyandiamid, Natriumnitrat, Chile-Salpeter oder Calciumnitrat sowie Langzeitdüngemittel wie Oxamid, Harnstoff-Formaldehyd-, Harnstoff-Acetaldehyd- oder Harnstoff-Glyoxal-Kondensate, beispielsweise Ureaform, Acetylendiharnstoff, Isobutylidendiharnstoff oder Crotonylidendiharnstoff, verwendet werden können. Weiterhin können auch Verbindungen enthalten sein, welche einen oder mehrere der Pflanzennährstoffe Phosphor, Kalium, Magnesium, Calcium oder Schwefel enthalten sowie Verbindungen, welche die Spurenelemente Bor, Eisen, Kupfer, Zink, Mangan oder Molybdän enthalten. Beispiele für solche Verbindungen sind Monoammoniumphosphat, Diammoniumphosphat, Superphosphat, Thomasphosphat, Tripelsuperphosphat, Dicalciumphosphat, Kaliumphosphat, teilweise oder vollständig aufgeschlossene Rohphosphate, Kaliumnitrat, Kaliumchlorid, Kaliumsulfat, Dikaliumphosphat, Magnesiumsulfat, Magnesiumchlorid, Kieserit, Dolomit, Kalk, Colemanit, Borsäure, Borax, Eisensulfat, Kupfersulfat, Zinksulfat, Mangansulfat, Ammoniummolybdat oder ähnliche Substanzen. Die Düngemittel können außerdem noch einen oder mehrere Wirkstoffe wie beispielsweise Nitrifikationsinhibitoren, Ureaseinhibitoren, Herbizide, Fungizide, Insektizide, Wachstumsregulatoren, Hormone, Pheromone oder andere Pflanzenschutzmittel oder Bodenhilfsstoffe in Mengen von 0,01 bis 20 Gew.-% bezogen auf das Düngemittel enthalten. Weiterhin können auch Komplexbildner wie EDTA oder EDDHA enthalten sein.

Bevorzugt ist die Verwendung von Mehrnährstoffdüngern, insbesondere solchen mit Langzeitwirkung, welche beispielsweise als Stickstoffquelle Verbindungen wie Ureaform, Acetylendiharnstoff, Isobutylidendiharnstoff oder Crotonylidendiharnstoff enthalten. Weiterhin bevorzugt ist die Verwendung von umhüllten Düngemitteln, bei denen die Düngemittelgranalien von einer dünnen Polymermembran umgeben sind. Umhüllte Düngemittel zeichnen sich durch eine verzögerte Nährstofffreisetzung aus und sind dem Fachmann an sich bekannt.

Als Pflanzenschutzmittel kommen beispielsweise Insektizide, Fungizide, Wachstumsregulatoren und Herbizide, gegebenenfalls in Kombination mit entsprechenden Safenern, in Frage. Bevorzugt sind systemische Wirkstoffe, die von den Pflanzen über die Wurzeln aufgenommen werden.

Die Freisetzungssysteme bewirken eine verzögerte Freisetzung der Wirkstoffe, so dass die Pflanzen gegebenenfalls über ihre gesamte Wachstumsperiode, vorzugsweise mindestens ein Jahr, insbesondere zwei Jahre, mit Nähr- und/oder Pflanzenschutzmitteln versorgt sind.

Mikroverkapselte und andere Systeme mit verzögerter Wirkstofffreigabe (slow-releaseformulations) sind beispielsweise in H. Mollet, A. Grubenmann, Formulation Technology, Wiley-VCH, Weinheim 2001, Controlled Release Pesticides, ACS Symp. Series, No. 53, Am. Chem. Soc., Washington D.C. 1977, WO 97/14308 und H. B. Scher, Controlled-release delivery systems for pesticides, Macel Dekker, Inc., New York 1999, beschrieben.

Sind Wirkstofffreisetzungssysteme enthalten, so beträgt ihr Anteil im Allgemeinen 0,01 bis 20, bevorzugt 0,05 bis 10 Gew.-%.

Beispiele für solche Systeme sind Containerkulturen, Balkonkästen.

Die Pflanzen können als Saatgut, Stecklinge oder auch in vorgezogener Form eingesetzt werden.

Das Pflanzensubstrat eignet sich weiterhin insbesondere für alle Zier- und Containerpflanzen (Gehölze, Stauden) sowie Obst- und Gemüsearten.

Das Pflanzensubstrat eignet sich weiterhin insbesondere für den Einsatz in Gewächshäusern, in Freiland-Containern, Balkonkästen, Pflanzgefäßen, Blumenkübeln, als bepflanzbare oder zur Einsaat bestimmte Substratsäcke und zur Jungpflanzenanzucht als Bewurzelungsmedium.

Das erfindungsgemäße Pflanzensubstrat kann auch als Bodenverbesserungsmittel, d.h. als Zusatz zu Böden oder anderen Substraten verwendet werden.

Die Erfindung wird durch die Beispiele näher erläutert.

### Beispiele

In 13er Plastiktöpfe wurden die Substrate der Beispiele 1 - 4 und der Vergleichsbeispiele 1 und 2 gefüllt und mit je einer Chinakohljungpflanze bepflanzt. Das Düngen und Gießen (Fertigieren) erfolgte mit einem wasserlöslichen Volldünger (0,5 %_{ig} Hakaphos® spezial (NPK-Dünger mit Mg und Spurennahrstoffen). Gegossen wurde praxisüblich immer dann, wenn die Variante 7 Wasser bedurfte. Abweichend hiervon wurden die Überstauvarianten 4 und Vergleichsbeispiel 2 zur Prüfung auf Gießfestigkeit täglich mit Fertigationslösung auf Durchfluss gegossen.
Die Töpfe fanden Aufstellung im Gewächshaus bei ca. 18 -23 °C.

Es wurden folgende Ergebnisse erhalten:

| Beispiel Nr. | Substrat | Pflanzenwachstum |
|---|---|---|
| 1 | MFS im Block | +++ |
| 2 | MFS in Flocken | +++ |
| 3 | MFS in Flocken + SAP | +++ |
| Vergleichsbeispiel 1 | kommerzielle Blumenerde | +++ |
| Vergleichsbeispiel 2 | kommerzielle Blumenerde mit Überstau | + |
| 4 | MFS in Flocken mit Überstau | +++ |

| | | |
|---|---|---|
| MFS = Melamin Formaldehyd Schaumstoff (Basotect®, BASF) SAP = Superabsorber + befriedigend, ++ gut, +++ sehr gut | | |

Ein gutes Pflanzenwachstum ließ sich in den Beispielen 1, 2, 3 und der konventionellen Blumenerde (Vergleichsbeispiel 1) beobachten.

Unter Bedingungen täglicher Übergießung (Überstau) bei täglichen Nährlösungsgaben von 100 mL wie in Beispiel 4 und dem Vergleichsbeispiel 2, zeigte sich die Überlegenheit von MFS-Flocken als Substrat gegenüber handelüblicher Blumenerde. In Folge der Vernässung bei dem handelsüblichen Substrat auf Torfbasis blieben die Chinakohlpflanzen stark im Wachstum zurück und erreichten nur ein Drittel der Frischmasse des Sprosses der Pflanzen, die in MFS-Flocken mit einem mittleren Durchmesser von ca. 20 mm kultiviert wurden (Beispiel 4).

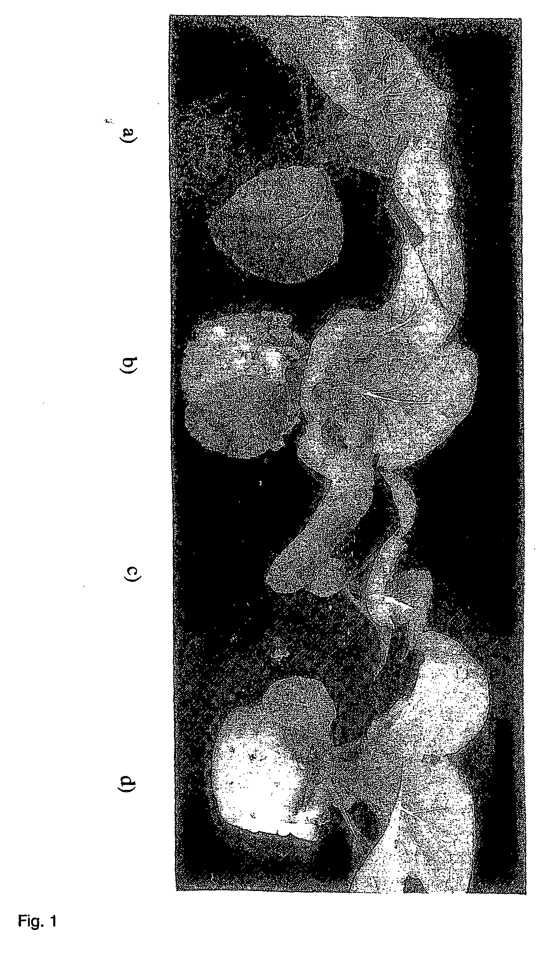

Die Figur 1 zeigt Pflanzen, die gemäß den Beispielen 2 (b) und 4 (d) sowie den Vergleichsbeispielen 1 (a) und 2 (c) kultiviert wurden.

## Patentansprüche

1. Pflanzensubstrat, bestehend aus
(a) 75 bis 100 Gew.-% an einem offenzelligen Melamin-Formaldehyd-Schaumstoff, und (b) 0 bis 25 Gew.-% an einem oder mehreren Wirkstofffreisetzungssystemen und/oder weiteren Zusatzstoffen, wobei der offenzellige Melamin-Formaldehyd-Schaumstoff als Block vorliegt.

2. Pflanzensubstrat gemäß Anspruch 1, wobei es sich bei dem Melamin-Formaldehyd-Schaumstoff um ein Abfall- oder Recyclingmaterial handelt.

3. Pflanzensubstrat gemäß Anspruch 1 oder 2, wobei die Rohdichte des Melamin-Formaldehyd-Schaumstoffs 4 bis 100 g/l beträgt.

4. Pflanzensubstrat gemäß einem der Ansprüche. 1 bis 3, enthaltend einen Einzel-oder Mehrnährstoffdünger.

5. Pflanzensubstrat gemäß einem der Ansprüche 1 bis 4, enthaltend ein Pflanzenschutzmittel aus der Gruppe der Insektizide, Fungizide und Wachstumsregulatoren.

6. Verwendung eines Pflanzensubstrats gemäß einem der Ansprüche 1 bis 5 zum Kultivieren von Pflanzen.

7. Verfahren zum Kultivieren von Pflanzen, wobei die Pflanzen in einem Pflanzensubstrat gemäß einem der Ansprüche 1 bis 5 aufgezogen werden.

## Claims

1. A plant substrate consisting of
(a) 75 to 100% by weight of an open-celled melamine/formaldehyde foam, and
(b) 0 to 25% by weight of one or more systems for releasing active substances and/or of other additives, where the open-celled melamine/formaldehyde foam is in the form of a block.

2. The plant substrate according to claim 1, where the melamine/formaldehyde foam is a waste or recycled material.

3. The plant substrate according to claim 1 or 2, where the net specific gravity of the melamine/formaldehyde foam is 4 to 100 g/l.

4. The plant substrate according to any of claims 1 to 3, comprising a straight or a compound fertilizer.

5. The plant substrate according to any of claims 1 to 4, comprising a plant protection agent from the group of insecticides, fungicides and growth regulators.

6. The use of a plant substrate according to any of claims 1 to 5 for culturing plants.

7. A method of culturing plants, where the plants are grown in a plant substrate according to any of claims 1 to 5.

## Revendications

1. Substrat végétal, constitué de
(a) 75 à 100 % en poids d'une mousse mélamine-formaldéhyde à cellules ouvertes, et
(b) 0 à 25 % en poids d'un ou plusieurs systèmes de libération de substances actives, et/ou d'autres additifs, la mousse mélamine-formaldéhyde à cellules ouvertes se trouvant sous forme de bloc.

2. Substrat végétal selon la revendication 1, dans lequel la mousse mélamine-formaldéhyde consiste en un matériau de déchet ou de recyclage.

3. Substrat végétal selon la revendication 1 ou 2, dans lequel la densité apparente de la mousse mélamine-formaldéhyde vaut de 4 à 100 g/l.

4. Substrat végétal selon l'une quelconque des revendications 1 à 3, contenant un engrais simple ou composé.

5. Substrat végétal selon l'une quelconque des revendications 1 à 4, contenant un agent phytosanitaire choisi dans le groupe des insecticides, fongicides et régulateurs de croissance.

6. Utilisation d'un substrat végétal selon l'une quelconque des revendications 1 à 5, pour la culture de plantes.

7. Procédé pour la culture de plantes, dans lequel on fait pousser les plantes dans un substrat végétal selon l'une quelconque des revendications 1 à 5.
